(19) Europäisches Patentamt
European Patent Office
Office européen des brevets

(11) **EP 4 455 730 A1**

(12) **DEMANDE DE BREVET EUROPEEN**

(43) Date de publication:
**30.10.2024 Bulletin 2024/44**

(21) Numéro de dépôt: **24171912.9**

(22) Date de dépôt: **23.04.2024**

(51) Classification Internationale des Brevets (IPC):
**G01S 13/90** (2006.01)

(52) Classification Coopérative des Brevets (CPC):
**G01S 13/9056;** G01S 7/024; G01S 13/24;
G01S 2013/0245

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **27.04.2023 FR 2304250**

(71) Demandeur: **Thales**
**92190 Meudon (FR)**

(72) Inventeurs:
• **GILLIOT, Adrien**
**33700 MERIGNAC (FR)**

• **CORRETJA, Vincent**
**33700 MERIGNAC (FR)**
• **LEGER, Nicolas**
**33700 MERIGNAC (FR)**
• **QUINQUIS, Alexandre**
**33700 MERIGNAC (FR)**
• **COTTRON, Rodolphe**
**33700 MERIGNAC (FR)**

(74) Mandataire: **Atout PI Laplace**
**Immeuble Up On**
**25 Boulevard Romain Rolland**
**CS 40072**
**75685 Paris Cedex 14 (FR)**

(54) **SYSTÈME DE DÉTECTION COMPRENANT UNE ANTENNE RÉSEAU À COMMANDE DE PHASE ET PROCÉDÉ DE DÉTECTION ASSOCIÉ**

(57) L'invention concerne un système de détection (1) comprenant une antenne réseau à commande de phase (12) comprenant des éléments rayonnants unitaires, ledit système étant adapté pour, à chaque cycle, diriger successivement, par l'application successive d'une première et deuxième lois de phase déterminée aux signaux électriques d'alimentation de l'antenne réseau, le rayonnement d'antenne vers une première zone cible (Z1), puis une deuxième zone cible (Z2) disjointe de la première zone cible (Z1) et déterminer une image de chaque zone cible (Z1) en fonction des échos reçus depuis chacune des première et deuxième zones cibles.

[Fig. 6]

EP 4 455 730 A1

**Description**

*Domaine technique :*

L'invention se situe dans le domaine de l'imagerie issue de l'analyse de réflexions (échos), de signaux émis, sur des obstacles rencontrés par les signaux émis et utilisant une antenne à balayage électronique, permettant d'appliquer des déphasages sélectifs des signaux électriques alimentant les éléments rayonnants selon des lois de phase linéaires et de les modifier de façon dynamique, ce qui a pour effet de pointer le faisceau dans des directions successives différentes.

Les bases de l'imagerie par radar à synthèse d'ouverture sont notamment données dans L. FERRO-FAMIL, Principes de l'imagerie Radar à synthèse d'ouverture (RSO), Techniques de l'ingénieur, 2013.

*Technique antérieure :*

Les procédés traditionnels d'imagerie Radar à Synthèse d'Ouverture (RSO ou « SAR » en terminologie anglaise) ou Radar à Synthèse d'Ouverture Inverse (RSOI ou « ISAR » en terminologie anglaise) émettent des impulsions de formes d'ondes dimensionnées de façon à construire une image à très haute résolution distance et très haute résolution angulaire de la portion de sol d'intérêt. Usuellement, seule une fraction du temps utilisé pour la réception de chaque impulsion (généralement la fin) produit du signal effectivement utilisé par le procédé d'imagerie.

Ils consistent en l'alternance d'une phase d'émission d'une ou plusieurs impulsions, succédée par une phase d'écoute durant laquelle le système Radar (idem pour un Radar Sonar) numérise et traite les échos reçus. Cette alternance de phase émission/écoute et répétée un grand nombre de fois (en fonction de la résolution transverse désirée pour l'image finale), les signaux numérisés subissant ensuite une séquence de traitements (compensation de migrations, transformée de Fourier, focalisation, mise en conformité, etc.). Dans de nombreux cas, seule une faible portion de la phase d'écoute produit un signal utile, l'essentiel du temps d'écoute est donc gâché.

Il existe donc un besoin d'améliorer l'efficacité de ces procédés d'imagerie.

*Résumé de l'invention :*

A cet effet, suivant un premier aspect, la présente invention décrit un procédé de détection dans un système de détection comprenant une antenne réseau à commande de phase comprenant des éléments rayonnants unitaires, ledit système étant adapté pour, via ladite antenne réseau, émettre des ondes et recevoir des échos desdites ondes émises et pour analyser les échos reçus ; ledit procédé de détection comprenant les étapes suivantes à chacun des plusieurs cycles de traitement consécutifs :

- commander l'application d'une première loi de phase déterminée à des signaux électriques d'alimentation des éléments rayonnants unitaires de l'antenne réseau pour diriger le rayonnement d'antenne vers une première zone cible ;
- la première loi de phase commandée étant appliquée auxdits éléments rayonnants en réponse à ladite commande : au moins une première émission d'onde est effectuée, des échos issus de ladite première émission d'onde sont reçus ; puis
- une première analyse desdits échos reçus est effectuée ;
- une image de la première zone cible est déterminée en fonction d'au moins ladite première analyse ;

ledit procédé étant caractérisé en ce qu'il comprend en outre les étapes suivantes pendant chacun desdits cycles :

- commander l'application d'au moins une deuxième loi de phase déterminée à des signaux électriques d'alimentation desdits éléments rayonnants unitaires de l'antenne réseau pour diriger le rayonnement d'antenne vers une deuxième zone cible ; la deuxième loi de phase étant différente de la première loi commandée lors dudit même cycle ; la deuxième zone cible étant disjointe de la première zone cible et la distance entre la première zone cible et l'antenne réseau étant distincte de la distance entre la deuxième zone cible et l'antenne réseau ;
- la deuxième loi de phase commandée étant appliquée auxdits éléments rayonnants en réponse à ladite commande : au moins une deuxième émission d'onde est effectuée, des échos issus de ladite deuxième émission d'onde sont reçus ; puis
- une deuxième analyse desdits échos reçus est effectuée ;
- une image de la deuxième zone cible est déterminée en fonction d'au moins ladite deuxième analyse.

Le procédé selon l'invention vise à exploiter l'agilité du balayage électronique afin de combler les temps d'écoute inutiles évoqués plus haut, par l'exécution, en parallèle de l'imagerie d'une zone cible, d'un ou plusieurs processus d'imagerie par synthèses d'ouverture supplémentaires, sur une autre zone cible et en utilisant les mêmes éléments rayonnants unitaires (ou au moins certains d'entre eux).

Dans des modes de réalisation, un tel procédé comprendra en outre l'une au moins des caractéristiques suivantes :

- pour au moins un desdits cycles :
- l'angle de site de l'antenne réseau pendant l'application de la deuxième loi de phase est différent de l'angle de site de l'antenne réseau pendant l'application de la première loi de phase ; et/ou

- l'angle d'azimut de l'antenne réseau pendant l'application de la deuxième loi de phase est différent de l'angle d'azimut de l'antenne réseau pendant l'application de la première loi de phase ; et/ou
- la résolution de l'image de la première zone cible est distincte de la résolution de l'image de la deuxième zone cible ; et/ou
- la taille de l'image de la première zone cible est distincte de la taille de l'image de la deuxième zone cible ;
- une première forme d'onde est sélectivement utilisée pour la première émission d'onde vers la première zone cible et une deuxième forme d'onde distincte de la première est sélectivement utilisée pour deuxième émission d'onde vers la deuxième zone cible selon une ou plusieurs des dispositions suivantes :
- la première forme d'onde est émise sur une première fréquence porteuse F1 et la deuxième forme d'onde est émise sur une deuxième fréquence porteuse distincte de la première fréquence porteuse ;
- lorsque la première zone cible et la deuxième zone cible sont situées à des distances différentes de l'antenne, lors de la première, respectivement deuxième, émission, la durée d'impulsion et la période de répétition lors de la première, respectivement deuxième émission, sont distinctes et sont fonction de la distance de la première, respectivement deuxième cible, par rapport à l'antenne ;
- la polarisation de la première forme d'onde est distincte de la polarisation de la deuxième forme d'onde, définies chacune en fonction de la géométrie d'observation et du type de zone cible, de façon à maximiser le rapport cible à fouillis de l'image ;

la première zone cible reste la même sur plusieurs cycles consécutifs et la deuxième zone cible reste la même sur plusieurs cycles consécutifs ;

lors de chacun desdits cycles :

- la première émission d'onde vers la première zone cible est effectuée, la première loi de phase commandée étant appliquée auxdits éléments rayonnants ; puis
- la deuxième émission d'onde vers la deuxième zone cible est effectuée, la deuxième loi de phase commandée étant appliquée auxdits éléments rayonnants ; puis
- les échos issus de la première, respectivement deuxième émission d'onde, sont reçus, la première, respectivement deuxième loi de phase commandée étant alors appliquée auxdits éléments rayonnants.

Suivant un autre aspect, l'invention décrit un système de détection comprenant une antenne réseau à commande de phase comprenant des éléments rayonnants unitaires, ledit système étant adapté pour, via ladite antenne réseau, émettre des ondes et recevoir des échos desdites ondes émises et pour analyser les échos reçus ; le système de détection étant adapté pour, à chacun de plusieurs cycles de traitement consécutifs, commander l'application d'une première loi de phase déterminée à des signaux électriques d'alimentation des éléments rayonnants unitaires de l'antenne réseau pour diriger le rayonnement d'antenne vers une première zone cible ; et la première loi de phase commandée étant appliquée auxdits éléments rayonnants en réponse à ladite commande : pour effectuer au moins une première émission d'onde et recevoir des échos issus de ladite première émission d'onde sont reçus ; puis pour effectuer une première analyse desdits échos reçus et pour déterminer une image de la première zone cible en fonction d'au moins ladite première analyse ;

ledit système de détection étant caractérisé en ce qu'il est en outre adapté, pendant chacun desdits cycles, pour commander l'application d'au moins une deuxième loi de phase déterminée à des signaux électriques d'alimentation desdits éléments rayonnants unitaires de l'antenne réseau pour diriger le rayonnement d'antenne vers une deuxième zone cible, la deuxième loi de phase étant différente de la première loi commandée lors dudit même cycle, la deuxième zone cible étant disjointe de la première zone cible et la distance entre la première zone cible et l'antenne réseau étant distincte de la distance entre la deuxième zone cible et l'antenne réseau ; puis, la deuxième loi de phase commandée étant appliquée auxdits éléments rayonnants en réponse à ladite commande, pour effectuer au moins une deuxième émission d'onde et recevoir des échos issus de ladite deuxième émission d'onde, puis pour effectuer une deuxième analyse desdits échos reçus et déterminer une image de la deuxième zone cible en fonction d'au moins ladite deuxième analyse.

Dans des modes de réalisation, un tel système comprendra en outre l'une au moins des caractéristiques suivantes :

- pour au moins un desdits cycles : l'angle de site de l'antenne réseau pendant l'application de la deuxième loi de phase est différent de l'angle de site de l'antenne réseau pendant l'application de la première loi de phase ; et/ou l'angle d'azimut de l'antenne réseau pendant l'application de la deuxième loi de phase est différent de l'angle d'azimut de l'antenne réseau pendant l'application de la première loi de phase ; et/ou la résolution de l'image de la première zone cible est distincte de la résolution de l'image de la deuxième zone cible ; et/ou la taille de l'image de la première zone cible est distincte de la taille de l'image de la deuxième zone cible ;
- le système de détection est adapté pour utiliser sélectivement une première forme d'onde pour la première émission d'onde vers la première zone cible et pour utiliser sélectivement une deuxième forme d'onde distincte de la première pour deuxième émission d'onde vers la deuxième zone cible selon une ou plusieurs des dispositions suivantes :

- la première forme d'onde est émise sur une première fréquence porteuse F1 et la deuxième forme d'onde est émise sur une deuxième fréquence porteuse distincte de la première fréquence porteuse ;

- lorsque la première zone cible et la deuxième zone cible sont situées à des distances différentes de l'antenne, lors de la première, respectivement deuxième, émission, la durée d'impulsion et la période de répétition lors de la première, respectivement deuxième émission, sont distinctes et sont fonction de la distance de la première, respectivement deuxième cible, par rapport à l'antenne ;

- la polarisation de la première forme d'onde est distincte de la polarisation de la deuxième forme d'onde, définies chacune en fonction de la géométrie d'observation et du type de zone cible, de façon à maximiser le rapport cible à fouillis de l'image ;

- la première zone cible reste la même sur plusieurs cycles consécutifs et la deuxième zone cible reste la même sur plusieurs cycles consécutifs ;

- le système de détection est adapté pour, lors de chacun desdits cycles :

  - effectuer la première émission d'onde vers la première zone cible (Z1), la première loi de phase commandée étant appliquée auxdits éléments rayonnants ; puis

  - effectuer la deuxième émission d'onde vers la deuxième zone cible (Z2), la deuxième loi de phase commandée étant appliquée auxdits éléments rayonnants ; puis

  - recevoir les échos issus de la première, respectivement deuxième émission d'onde, la première, respectivement deuxième loi de phase commandée étant alors appliquée auxdits éléments rayonnants.

Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 est une illustration de différentes zones cibles à imager par un porteur ;

[Fig. 2] La figure 2 illustre des cycles pour imager une première zone cible dans l'art antérieur ;

[Fig. 3] La figure 3 illustre des cycles pour imager une deuxième zone cible dans l'art antérieur ;

[Fig. 4] La figure 4 illustre des cycles pour imager de manière entrelacée une première zone cible et une deuxième zone cible dans un mode de réalisation de l'invention ;

[Fig. 5] La figure 5 représente schématiquement un système d'antenne multi-panneau dans un mode de réalisation de l'invention ;

[Fig. 6] La figure 6 représente schématiquement un système de détection dans un mode de réalisation de l'invention ;

[Fig. 7] La figure 7 représente schématiquement les étapes d'un procédé de détection dans un mode de réalisation de l'invention.

Des références identiques peuvent être utilisées dans des figures différentes lorsqu'elles désignent des éléments identiques ou comparables.

Description détaillée :

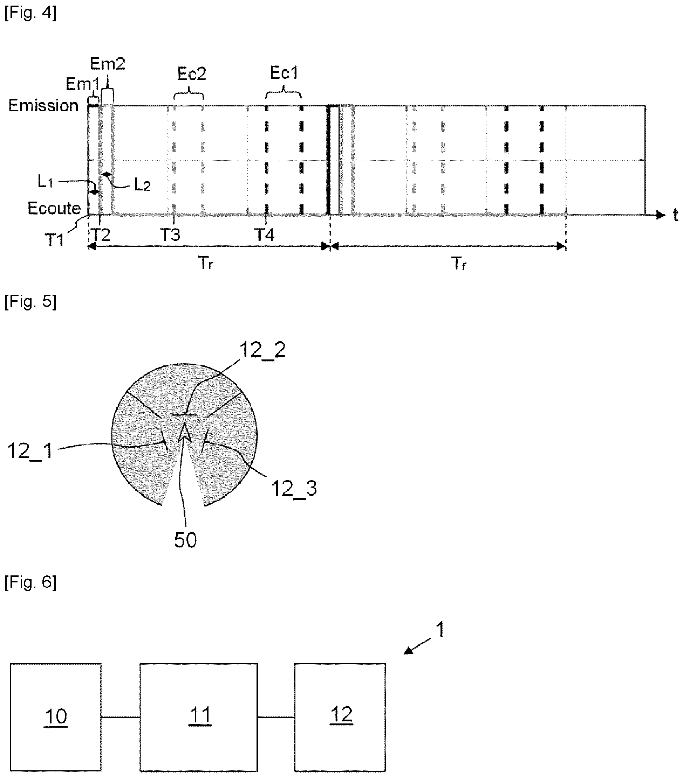

La figure 6 représente un système de détection 1 dans un mode de réalisation de l'invention.
Le système de détection 1 comprend notamment un bloc de contrôle 10, un bloc d'émission et réception radar 11 et un système d'antenne 12 tels que représentés en figure 6. Ce système de détection 1 est à balayage électronique, i.e. le système d'antenne 12 comprend un ou plusieurs antennes réseaux à commande de phase. Une antenne réseau comporte des éléments rayonnants unitaires répartis sur un panneau.
Dans l'exemple considéré, le système de détection 1 est de type RADAR RSO ou RSOI.
Le système de détection 1 est adapté pour, dans au moins une direction d'acquisition considérée, pointant sur une cible, qu'on appellera ci-après zone cible, émettre des impulsions radar, recevoir puis analyser les échos de ces impulsions.
Le bloc de contrôle 10 est adapté pour transmettre au bloc d'émission et réception radar 11 des commandes. Ces commandes définissent les phases des signaux électriques respectifs à générer par le bloc d'émission et réception radar 11 puis à fournir aux éléments rayonnants unitaires respectifs. Ces commandes définissent quand déclencher les changements de phases des signaux électriques.
De façon connue, le bloc de contrôle 11 est adapté pour ajuster la valeur de phase de chaque signal électrique destiné à alimenter un élément rayonnant unitaire (et ainsi ajuster les déphasages entre les signaux alimentant des éléments rayonnants distincts) de façon à modifier le diagramme d'émission de l'antenne réseau (« dépointage électronique », utilisé pour concentrer le gain d'antenne dans la direction d'observation voulue). En réception, similairement, le dépointage est réalisé par l'ajustement sélectif en phase des signaux électriques délivrés par chaque élément rayonnant élémentaire. Dans un mode de réalisation, en phase de réception, la même loi de phase que lors de la phase d'émission est appliquée : on produit ainsi une antenne qui « regarde » dans la même direction que lors de l'émission. Au niveau électrique en phase de réception, cela permet effectivement de faire en sorte que tous les modules de réception de l'antenne produisent des signaux « en phase » pour la direction d'observation, que l'on peut ensuite sommer de façon cohérente, produisant ainsi le gain d'antenne espéré.

Le bloc d'émission et réception radar 11 est adapté pour, conformément aux commandes reçues du bloc de contrôle 10, générer des signaux électriques destinés au système d'antenne réseau 12 et pour traiter des signaux électriques reçu du système d'antenne 12.

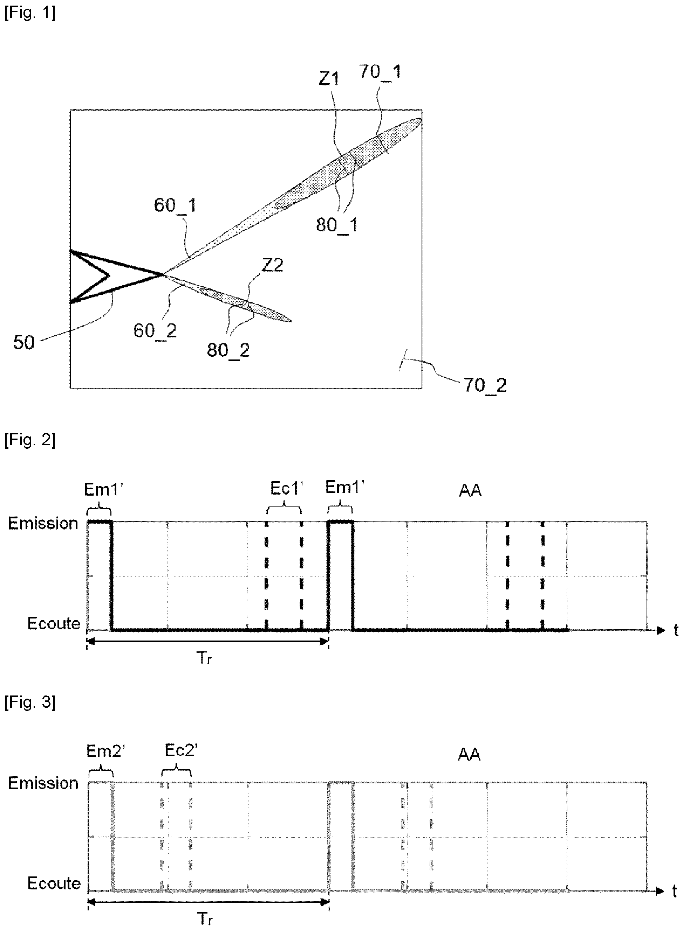

Le système de détection 1 en figure 1 est embarqué dans un porteur 50, par exemple un engin fixe ou un engin mobile de type aéronef (avion, hélicoptère, drone, planeur...), un satellite, un bâtiment marin ou sous-marin, un engin roulant etc.

La figure 1 représente schématiquement en vue de dessus, un porteur 50, ici un avion, représenté par une flèche noire et embarquant le système de détection 1, ainsi que deux zones d'intérêt distinctes, Z1 et Z2, correspondant à des domaines angulaires distincts et que l'on souhaite imager, sur lesquelles il convient donc de focaliser séquentiellement le diagramme de rayonnement de l'antenne 12.

Dans un mode de réalisation, la distance entre la première zone cible Z1 et l'antenne 12 est distincte de la distance entre la deuxième zone cible Z2 et le système de détection 1.

Un premier, respectivement deuxième, cône (remplis en pointillé) représente le lobe principal du diagramme d'antenne 12 quand dépointé électroniquement sur la première zone Z1, respectivement la deuxième zone Z2 (par l'application d'un gradient de phase à l"antenne défini par une première, respectivement deuxième loi de phase). L'intersection de ce lobe principal avec la surface (terre ou mer ici dans le cas d'un radar, fond marin dans le cas d'un sonar) donne approximativement une section conique, représentée ici en pointillé plus dense.

Dans la direction de pointage focalisée sur la zone Zi, i = 1, 2, une forme d'onde est émise par le système de détection 1 pendant la durée $L_i$, puis s'ensuit une période d'écoute, pendant la durée $T_r$ - $L_i$, au cours les éventuels échos sont numérisés On obtient ainsi les distance minimale et maximale instrumentées selon les formules génériques :

$$D_{\min inst} = c.\frac{L_i}{2} \quad D_{\max inst} = c.\frac{T_r}{2}$$

avec $c$ la vitesse de propagation des ondes émises.

Ces formules génériques sont potentiellement à adapter selon la nature des traitements appliqués par la suite, mais ces traitements ne sont pas l'objet de l'invention.

Les distances $D_{\min inst}$ et $D_{\max inst}$ depuis le porteur 50 sont représentées en Figure 1 par des arcs de cercles noirs pour chacun des 2 pointages (le procédé est également utilisable pour plus de 2 pointages), référencés par 60_1 et 70_1 pour le pointage vers la zone Z1 et par 60_2 et 70_2 pour le pointage vers la zone Z1.

De façon générale (limite matérielle), on a :

$$FF_{min} \leq \frac{L_i}{T_r} \leq FF_{max}$$

où $FF$ est l'acronyme de Facteur de Forme. Notamment, pour certaines géométries d'acquisition, l'empreinte au sol du lobe antenne principal (symbolisé par les pointillés denses en Figure 1) ne permet pas de couvrir l'intégralité du domaine illustré, ce qui est le cas de l'exemple en Figure 1. Généralement, cette empreinte au sol limitée ou bien la charge calculatoire des traitements d'imagerie conduisent à n'utiliser qu'une portion (nommée 'domaine utile') du domaine distance instrumenté par la forme d'onde pour construire l'image par Synthèse d'Ouverture. Les limites de cette portion utile sont matérialisées en Figure 1 par les traits 80_1 concernant la direction de pointage vers la zone Z1 et par les traits 80_2 concernant la direction de pointage vers la zone Z2. La zone Z1 est positionnée entre les deux traits 80_1 et la zone Z2 est positionnée entre les deux traits 80_2. Chacun de ces domaines distance utile correspond à une période d'écoute utile.

Dans les systèmes d'imagerie radar de l'art antérieur, l'exécution des traitements d'imagerie par Synthèse d'Ouverture sur les 2 (ou plus) zones Z1, Z2 de la Figure 1 est effectuée séquentiellement. Ces systèmes de l'état de l'art sont donc soumis à la contrainte (1) : le temps d'acquisition total $T_{e\,tot}$ est la somme des temps d'acquisition unitaires $T_{e,i}$ ($i \in \{1,2\}$ dans l'exemple de la Figure 1, $i \in \{1, ..., N\}$ de façon générale).

La figure 2 présente 2 cycles d'émission/réception de durée $T_r$ d'un système radar de l'art antérieur, utilisé pour imager la zone Z1 seule au cours des cycles. Durant chaque cycle, le radar entre donc une fois en phase d'émission (onde émise Em1'), et une fois en phase d'écoute. La portion du temps d'écoute utile (Ec1') correspondant au domaine distance utile (section entre les traits 80_1 de la figure 1) est délimitée par des tirets verticaux.

Similairement, la figure 3 présente 2 cycles d'émission/réception d'un système de l'art antérieur, utilisé pour imager la zone Z2 seule au cours des cycles. Durant chaque cycle de durée $T_r$, le système radar entre donc une fois en phase d'émission (onde émise Em2'), et une fois en phase d'écoute. La portion du temps d'écoute utile (Ec2'), correspondant au domaine distance utile (section entre les traits 80_2 de la figure 1) est délimitée par des tirets verticaux.

Le procédé selon l'invention vise à réduire ce temps nécessaire pour imager des zones distinctes en entrelaçant temporellement la formation des images des différentes zones. Un système selon l'invention est donc soumis à la contrainte : le temps d'acquisition total est le maximum des différents temps d'acquisition unitaires $T_{e,i}$. Cette forte réduction du temps de traitement total est obtenue par exploitation conjointe des temps morts (phases d'écoute hors écoute utile) lors du procédé d'imagerie et de l'agilité du balayage électronique.

Un procédé de détection selon l'invention comprend les étapes suivantes à un cycle de traitement consécutif, de durée $T_r$ :

- le bloc de contrôle 10 commande l'application d'une première loi de phase déterminée (celle pour que la zone Z1 soit dans le secteur délimité par les traits 80_1) aux signaux électriques d'alimentation des éléments rayonnants unitaires de l'antenne réseau 12 pour diriger le rayonnement d'antenne vers Z1 ;
- la première loi de phase commandée étant appliquée auxdits éléments rayonnants en réponse à ladite commande : au moins une première émission d'onde est effectuée, des échos issus de ladite première émission d'onde sont reçus ; puis
- une première analyse desdits échos reçus pendant le temps d'écoute utile est effectuée ;
- une image de la première zone cible est déterminée en fonction d'au moins ladite première analyse.

Selon le procédé, au cours du même cycle, une acquisition sur la zone Z2 (émission, écoute utile) est réalisée, pendant le temps du cycle non occupé ni par l'émission sur la zone Z1, ni par l'écoute utile des échos de cette émission.

Ainsi :

- le bloc de contrôle 10 commande l'application d'au moins une deuxième loi de phase déterminée, distincte de la première loi de phase (celle pour que la zone Z2 soit dans le secteur délimité par les traits 80_2) aux signaux électriques d'alimentation desdits éléments rayonnants unitaires de l'antenne réseau pour diriger le rayonnement d'antenne vers la zone Z2 ;
- la deuxième loi de phase commandée étant appliquée auxdits éléments rayonnants en réponse à ladite commande : au moins une deuxième émission d'onde est effectuée, des échos issus de ladite deuxième émission d'onde sont reçus ; puis

- une deuxième analyse desdits échos reçus est effectuée ;
- une image de la deuxième zone cible est déterminée en fonction d'au moins ladite deuxième analyse.

La deuxième émission d'onde est positionnée temporellement dans le cycle considéré de manière à ce que cette deuxième émission d'onde ainsi que le temps d'écoute utile des échos de cette deuxième émission d'onde soient en-dehors d'une part du temps de la première émission d'onde et d'autre part du temps d'écoute utile des échos de la première émission d'onde.

Lors du prochain cycle, ces étapes sont réitérées. Dans un mode de réalisation, au prochain cycle, les mêmes zones Z1, Z2 (et les lois de phase correspondantes) qu'au cycle précédent sont considérées. Dans un autre mode de réalisation, la zone Z1 et/ou la zone Z2 est modifiée.

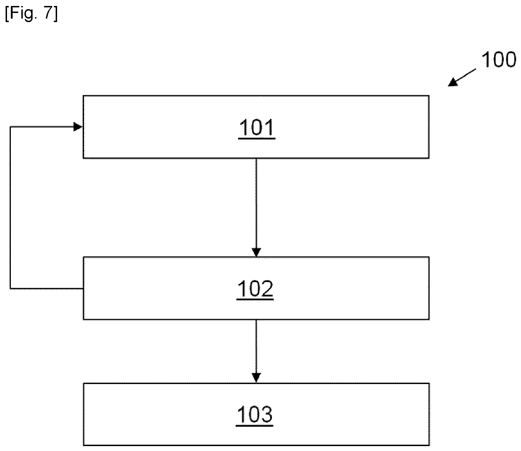

Dans un mode de réalisation particulier, le système de détection 1 est adapté pour mettre en oeuvre les étapes du procédé de détection 100 décrit ci-dessous en référence à la figure 7.

Dans le cycle considéré, dans une étape 101, le bloc de commande 10 commande que :

- une émission (Em1) d'une première forme d'onde soit effectuée à T1, pendant une durée $L_1$, pointant sur la zone Z1 (associée à la première loi de phase) ;
- une émission (Em2) d'une deuxième forme d'onde soit effectuée à T2, pendant une durée $L_2$, pointant sur la zone Z2 (associée à la deuxième loi de phase) ;
- une réception des échos de la deuxième forme d'onde soit effectuée à T3, pendant une durée d'écoute utile Ec2 (associée à la deuxième loi de phase) ;
- une réception des échos de la première forme d'onde soit effectuée à T4, pendant une durée d'écoute utile Ec1 (associée à la première loi de phase).

Suite à l'étape 101, dans l'étape 102, le bloc d'émission et réception radar 11 génère les signaux électriques conformément à cet ordonnancement et les transmet en temps voulu à l'antenne réseau 12, qui basculera ainsi successivement, en termes de pointage, à T1 vers Z1, à T2 vers Z2, à T4 vers Z1, à $T_r$+T2 vers Z2 etc. Les émissions et réceptions radar sont alors réalisées conformément à l'ordonnancement commandé.

Puis le cycle des étapes 101 et 102 est réitéré.

A l'issue de chaque cycle d'étapes 101-102, dans une étape 103, les signaux électriques fournis par l'antenne 12 en réception des échos pendant l'écoute utile Ec2 débutant à T3 (et pas des échos reçus pendant l'écoute utile Ec1 débutant à T4) sont ensuite traités (numérisation, filtrages, compensation de migrations, transformée de Fourier, focalisation, mise en conformité) et une image de la zone Z2 est déterminée par le bloc radar 11 en fonction de ces signaux traités. De même, les signaux électriques fournis par l'antenne 12 fonction des échos reçus pendant l'écoute utile Ec1 débutant à T4 (et pas des échos reçus pendant l'écoute utile Ec2 débutant à T3) sont traités et une image de la zone Z1 est déterminée par le bloc radar 11 en fonction de ces signaux traités.

Un système radar (idem un système sonar) ne peut émettre qu'une certaine quantité d'énergie en un temps de cycle $T_r$. Il peut donc arriver que la construction de l'entrelacement implique de diminuer les longueurs d'impulsion $L_i$ des différentes formes d'ondes entrelacées de façon à ne pas excéder cette limite (c'est le cas sur la 4, la valeur de chaque $L_i$ est divisée par 2 relativement aux graphiques des figures 2 et 3).

De plus, le déplacement, le cas échéant, du porteur 50 (notamment, son rapprochement ou éloignement de la zone imagée) doit être pris en compte lors de l'élaboration de l'entrelacement. Au cours du temps, il est en effet nécessaire de décaler temporellement les domaines d'écoute utiles, et il faut donc s'assurer à l'avance que les domaines d'écoutes entrelacés ne puissent pas se superposer temporellement (c'est-à-dire qu'il faut laisser un espacement suffisant entre ces domaines).

Dans un mode de réalisation, au moins une ou des dispositions parmi celles-ci-dessous seront prises en compte :

- si la valeur de durée de cycle $T_r$ pour les différentes acquisitions à entrelacer n'est pas la même, les différentes $T_r$ ont une relation harmonique entre elles (soit Zi, i = 1 à N les zones dont l'imagerie radar est entrelacée, la valeur de $T_r$ pour toute zone Zi est égale à un facteur n ou 1/n près, à la valeur de $T_r$ pour toute zone Zj,, n'étant un nombre entier) ;
- l'entrelacement ne provoque pas de collision entre domaines d'écoute d'utiles ;
- la somme des $L_i$ n'excède le facteur de forme maximum (c'est-à-dire généralement que le radar 1 n'émet pas plus d'énergie qu'il ne le peut en un temps donné) ;
- les $L_i$ résultant de l'entrelacement (c'est-à-dire potentiellement réduites) conduisent à un rapport signal à bruit suffisant (i.e. supérieur à un seuil prédéfini) pour chaque image finale.

A titre d'exemple, les lois de phase utilisées dans l'exemple ci-dessus sont du type

$$\exp\left(i\frac{2\pi}{\lambda}x_k\,sin(\theta)\right)$$

, avec $\lambda$ la longueur d'onde de la porteuse, $x_k$ la distance du $k$-ième élément rayonnant de l'antenne au centre de l'antenne, et $\theta$ l'angle de dépointage électronique souhaité.

Le cas d'entrelacement décrit ci-dessus et illustré en figure 4 n'est qu'un exemple : l'ordonnancement entre l'émission vers la zone Z1, l'émission vers la zone Z2, l'écoute utile relative à Z2 et l'écoute utile relative à Z1 peut être différent, en fonction de la localisation des zones notamment. Par exemple : émission vers la zone Z1 puis émission vers la zone Z2, puis écoute utile relative à Z1, puis écoute utile relative à Z2. Dans un autre mode de réalisation où l'on souhaite minimiser le nombre de commutation des chaînes d'émission/réception et/ou le nombre de dépointages électroniques de l'antenne (en raison d'un trop grand temps de commutation/de dépointage électronique, ou de contraintes logicielles/matérielles liées à la fréquence maximale des commandes antennaires), l'ordonnancement optimal devient émission vers une première zone, puis écoute utile relative à cette première zone, puis émission vers la deuxième zone, puis écoute utile relative à la deuxième zone, impliquant notamment une division par 2 de la période de récurrence Tr (durée d'un cycle émission/réception) de façon à ne pas dégrader la résolution angulaire de l'image RSO à iso-temps d'imagerie.

Dans des modes de réalisation, l'une et/ou l'autre des dispositions suivantes est mises en oeuvre au cours d'au moins un cycle :

- l'angle de site pendant l'application de la deuxième loi de phase est différent de l'angle de site pendant l'application de la première loi de phase ;
- l'angle d'azimut de l'antenne réseau 12 pendant l'application de la deuxième loi de phase est différent de l'angle d'azimut de l'antenne réseau pendant l'application de la première loi de phase ; et/ou
- la résolution de l'image de la première zone cible est distincte de la résolution de l'image de la deuxième zone cible ; et/ou
- la taille de l'image de la première zone cible est distincte de la taille de l'image de la deuxième zone cible.

On rappelle que :

- l'angle de site est l'angle entre le plan tangent à la surface de la terre et la direction d'observation de l'antenne 12 ;
- l'angle d'azimut est l'angle entre la direction de visée et le Nord.

L'invention, en une période $T_r$ qui était nécessaire, dans l'art antérieur pour produire une seule image, permet de produire plusieurs images de secteurs non nécessairement contiguës, notamment non contiguës en azimut et/ou non contiguës en site (chaque secteur correspondant par exemple à l'intersection du lobe principal de rayonnement avec la surface d'intérêt : surface du sol ou de la mer ou du fond marin).

Dans un mode de réalisation, au cours de chaque cycle, la forme d'onde Em1 est émise sur une fréquence porteuse F1 distincte de la fréquence porteuse F2 sur laquelle la forme d'onde Em2 est émise. La réception pendant l'écoute utile Ec1 est centrée sur F1 et elle est centrée sur F2 pendant l'écoute utile Ec2. Cette séparation fréquentielle évite que les différents processus d'imagerie ne se polluent mutuellement ; et/ou une forme d'onde adaptée est définie sélectivement pour chaque zone cible en termes de l'un et/ou l'autre de ces autres paramètres :

- lors de chaque phase d'émission vers une zone cible, la durée d'impulsion et la période de répétition en fonction de la distance de la cible par rapport à l'antenne, la distance entre l'antenne et certaines des différentes zones cibles étant par exemple à des distances différentes de l'antenne ;
- polarisation de l'onde émise définie en fonction de la géométrie d'observation (par exemple, pour des angles de sites importants, et dans des conditions usuelles, le calcul montre qu'il est plus intéressant de polariser verticalement la forme d'onde émise ; à l'inverse la polarisation horizontale devient préférable pour de faibles angles de site) et du type de cible, de façon à maximiser le contraste (rapport cible à fouillis (fouillis de mer ou de sol selon les applications)) de l'image.

Moyennant une diminution du Rapport Signal à Bruit de chaque image, la solution présentée ci-dessus, en exploitant l'agilité de balayage offert par les systèmes RADAR à balayage électronique afin d'entrelacer angulairement la construction de multiples images RSO, permet ainsi, en un même temps d'acquisition qu'il fallait pour produire une seule image, de produire plusieurs images espacées angulairement, et sans diminution des résolutions distance/fréquence des images obtenues.

L'entrelacement a été décrit ci-dessus en référence à deux zones. L'invention est bien sûr applicable à un nombre N de zones supérieur ou égal à 3, entrelaçant alors dans un même cycle la construction de N images.

Dans un mode de réalisation, la différence entre la distance entre la première zone cible Z1 et la distance entre la deuxième zone cible Z2 et l'antenne 12 vérifie chacune d'un ensemble de contraintes comportant au moins une des contraintes suivantes :

- les fenêtres d'écoute associées aux zones Z1 et Z2 sont nécessairement distinctes et ne se superposent pas ;
- les fenêtres d'écoute sont suffisamment espacées temporellement pour permettre la commutation de la chaine de réception entre les différentes fréquences d'émissions associées aux émissions Em1 et Em2 ;

de façon à garantir un très faible niveau d'auto-pollution du système radar (*i.e.* les échos issus de l'émission Em1 ont une faible probabilité de polluer l'écoute Ec2 associée à la zone Z2, et inversement, par forte séparation en angle de site des zones imagées et des pointages antennaires associés).

Dans ce même mode de réalisation, la première zone cible Z1 est également fortement séparée de la seconde zone cible Z2 en termes d'angle de gisement (séparation angulaire supérieure à la largeur du lobe antennaire principal), de façon à garantir un très faible niveau d'auto-pollution du système radar (*i.e.* les échos issus de l'émission Em1 ont une faible probabilité de polluer l'écoute Ec2 associée à la zone Z2, et inversement, par forte séparation en angle de gisement des zones imagées et des pointages antennaires associés).

Dans un mode de réalisation, le bloc de contrôle 10 du système de détection 1 est adapté pour valider que cette différence vérifie bien ou non l'ensemble des contraintes et pour transmettre au bloc d'émission/réception radar les commandes de définition des phases des signaux électriques destinés à cibler Z1, Z2 en émission et réception seulement si le bloc de contrôle a validé que cette différence vérifie effectivement l'ensemble des contraintes.

Dans un mode de réalisation illustré en figure 5, le système d'antenne 12 du système de détection embarqué dans le porteur représenté par la flèche 50, comporte trois antennes réseaux (i.e. 3 panneaux) distincts 12_1, 12_2 et 12_3 schématisées par des barres de part et d'autre du porteur, ce qui permet au système de détection de couvrir un domaine gisement de 330° (voire zone grisée), avec un secteur aveugle en queue d'appareil.

L'invention a été décrite ci-dessus en référence à un RADAR. Elle est bien sûr applicable à tout système de détection doté d'antenne à commande de phase et adapté pour émettre des ondes et analyser les réflexions de ces ondes sur des obstacles, tels que les dispositifs à base de SONAR (SSO pour « Sonar à Synthèse d'Ouverture ou « SAS » en terminologie anglaise ; SSOI pour « Sonar à Synthèse d'Ouverture Inverse ou « ISAS » en terminologie anglaise), LIDAR...

Par exemple, l'invention est mise en oeuvre dans un mode de réalisation dans un sous-marin embarquant un sonar pour produire des images SSO (sonar à synthèse d'ouverture) et imager les fonds marins à des fins d'observation et de navigation par reconnaissance des fonds observés.

Dans un mode de réalisation, l'invention est utilisée dans le mode ISAR de manière à imager simultanément plusieurs cibles maritimes disjointes en gisement et élévation, en exploitant l'effet Doppler généré par leurs mouvements propres et indiqués par les échos reçus : tangage/roulis dus à la houle.

**Revendications**

1.   Procédé de détection dans un système de détection (1) comprenant une antenne réseau à commande de phase (12) comprenant des éléments rayonnants unitaires, ledit système étant adapté pour, via ladite antenne réseau (12), émettre des ondes et recevoir des échos desdites ondes émises et pour analyser les échos reçus ; ledit procédé de détection comprenant les étapes suivantes mis en oeuvre par le système de détection (1) à chacun de plusieurs cycles de traitement consécutifs :

- commander l'application d'une première loi de phase déterminée à des signaux électriques d'alimentation des éléments rayonnants unitaires de l'antenne réseau pour diriger le rayonnement d'antenne vers une première zone cible (Z1) ;
- la première loi de phase commandée étant appliquée auxdits éléments rayonnants en réponse à ladite commande : au moins une première émission d'onde est effectuée, des échos issus de ladite première émission d'onde sont reçus ; puis
- une première analyse desdits échos reçus est effectuée ;
- une image de la première zone cible (Z1) est déterminée en fonction d'au moins ladite première analyse ;

ledit procédé étant **caractérisé en ce qu'**il comprend en outre les étapes suivantes mis en oeuvre par le système de détection (1) pendant chacun desdits cycles :

- commander l'application d'au moins une deuxième loi de phase déterminée à des signaux électriques d'alimentation desdits éléments rayonnants unitaires de l'antenne réseau pour diriger le rayonnement d'antenne vers une deuxième zone cible (Z2) ; la deuxième loi de phase étant différente de la première loi commandée lors dudit même cycle, la deuxième zone cible (Z2) étant disjointe de la première zone cible (Z1) et la distance entre la première zone cible (Z1) et l'antenne réseau (12) étant distincte de la distance entre la deuxième zone cible (Z2) et l'antenne réseau (12) ;
- la deuxième loi de phase commandée étant appliquée auxdits éléments rayonnants en réponse à ladite commande : au moins une deuxième émission d'onde est effectuée, des échos issus de ladite deuxième émission d'onde sont reçus ; puis
- une deuxième analyse desdits échos reçus est effectuée ;
- une image de la deuxième zone cible (Z2) est déterminée en fonction d'au moins ladite deuxième analyse.

**2.** Procédé de détection selon la revendication 1, selon lequel pour au moins un desdits cycles :

- l'angle de site de l'antenne réseau (12) pendant l'application de la deuxième loi de phase est différent de l'angle de site de l'antenne réseau pendant l'application de la première loi de phase ; et/ou
- l'angle d'azimut de l'antenne réseau (12) pendant l'application de la deuxième loi de phase est différent de l'angle d'azimut de l'antenne réseau (12) pendant l'application de la première loi de phase ; et/ou
- la résolution de l'image de la première zone cible (Z1) est distincte de la résolution de l'image de la deuxième zone cible (Z2) ; et/ou
- la taille de l'image de la première zone cible (Z1) est distincte de la taille de l'image de la deuxième zone cible (Z2).

**3.** Procédé de détection selon la revendication 1 ou 2, selon lequel une première forme d'onde est sélectivement utilisée pour la première émission d'onde vers la première zone cible (Z1) et une deuxième forme d'onde distincte de la première est sélectivement utilisée pour deuxième émission d'onde vers la deuxième zone cible (Z2) selon une ou plusieurs des dispositions suivantes :

- la première forme d'onde est émise sur une première fréquence porteuse F1 et la deuxième forme d'onde est émise sur une deuxième fréquence porteuse distincte de la première fréquence porteuse ;
- lorsque la première zone cible (Z1) et la deuxième zone cible (Z2) sont situées à des distances différentes de l'antenne (12), lors de la première, respectivement deuxième, émission, la durée d'impulsion et la période de répétition lors de la première, respectivement deuxième émission, sont distinctes et sont fonction de la distance de la première, respectivement deuxième cible, par rapport à l'antenne ;
- la polarisation de la première forme d'onde est distincte de la polarisation de la deuxième forme d'onde, définies chacune en fonction de la géométrie d'observation et du type de zone cible, de façon à maximiser le rapport cible à fouillis de l'image.

**4.** Procédé de détection selon l'une quelconque des revendications précédentes, selon lequel la première zone cible (Z1) reste la même sur plusieurs cycles consécutifs et la deuxième zone cible (Z2) reste la même sur plusieurs cycles consécutifs.

**5.** Procédé de détection selon l'une des revendications précédentes, selon lequel lors de chacun desdits cycles :

- la première émission d'onde vers la première zone cible (Z1) est effectuée, la première loi de phase commandée étant appliquée auxdits éléments rayonnants ; puis

- la deuxième émission d'onde vers la deuxième zone cible (Z2) est effectuée, la deuxième loi de phase commandée étant appliquée auxdits éléments rayonnants ; puis

- les échos issus de la première, respectivement deuxième émission d'onde, sont reçus, la première, respectivement deuxième loi de phase commandée étant alors appliquée auxdits éléments rayonnants.

6. Système de détection (1) comprenant une antenne réseau à commande de phase (12) comprenant des éléments rayonnants unitaires, ledit système étant adapté pour, via ladite antenne réseau (12), émettre des ondes et recevoir des échos desdites ondes émises et pour analyser les échos reçus ; le système de détection (1) étant adapté pour, à chacun de plusieurs cycles de traitement consécutifs, commander l'application d'une première loi de phase déterminée à des signaux électriques d'alimentation des éléments rayonnants unitaires de l'antenne réseau pour diriger le rayonnement d'antenne vers une première zone cible (Z1) ; et la première loi de phase commandée étant appliquée auxdits éléments rayonnants en réponse à ladite commande : pour effectuer au moins une première émission d'onde et recevoir des échos issus de ladite première émission d'onde sont reçus ; puis pour effectuer une première analyse desdits échos reçus et pour déterminer une image de la première zone cible (Z1) en fonction d'au moins ladite première analyse ;

ledit système de détection (1) étant **caractérisé en ce qu'**il est en outre adapté, pendant chacun desdits cycles, pour commander l'application d'au moins une deuxième loi de phase déterminée à des signaux électriques d'alimentation desdits éléments rayonnants unitaires de l'antenne réseau pour diriger le rayonnement d'antenne vers une deuxième zone cible (Z2), la deuxième loi de phase étant différente de la première loi commandée lors dudit même cycle et la deuxième zone cible (Z2) étant disjointe de la première zone cible (Z1) et la distance entre la première zone cible (Z1) et l'antenne réseau (12) étant distincte de la distance entre la deuxième zone cible (Z2) et l'antenne réseau (12) ; puis, la deuxième loi de phase commandée étant appliquée auxdits éléments rayonnants en réponse à ladite commande, pour effectuer au moins une deuxième émission d'onde et recevoir des échos issus de ladite deuxième émission d'onde, puis pour effectuer une deuxième analyse desdits échos reçus et déterminer une image de la deuxième zone cible (Z2) en fonction d'au moins ladite deuxième analyse.

7. Système de détection (1) selon la revendication 6, dans lequel pour au moins un desdits cycles :

- l'angle de site de l'antenne réseau (12) pendant l'application de la deuxième loi de phase est différent de l'angle de site de l'antenne réseau pendant l'application de la première loi de phase ; et/ou

- l'angle d'azimut de l'antenne réseau (12) pendant l'application de la deuxième loi de phase est différent de l'angle d'azimut de l'antenne réseau (12) pendant l'application de la première loi de phase ; et/ou

- la résolution de l'image de la première zone cible (Z1) est distincte de la résolution de l'image de la deuxième zone cible (Z2) ; et/ou

- la taille de l'image de la première zone cible (Z1) est distincte de la taille de l'image de la deuxième zone cible (Z2).

8. Système de détection (1) selon la revendication 6 ou 7, adapté pour utiliser sélectivement une première forme d'onde pour la première émission d'onde vers la première zone cible (Z1) et pour utiliser sélectivement une deuxième forme d'onde distincte de la première pour deuxième émission d'onde vers la deuxième zone cible (Z2) selon une ou plusieurs des dispositions suivantes :

- la première forme d'onde est émise sur une première fréquence porteuse F1 et la deuxième forme d'onde est émise sur une deuxième fréquence porteuse distincte de la première fréquence porteuse ;

- lorsque la première zone cible (Z1) et la deuxième zone cible (Z2) sont situées à des distances différentes de l'antenne (12), lors de la première, respectivement deuxième, émission, la durée d'impulsion et la période de répétition lors de la première, respectivement deuxième émission, sont distinctes et sont fonction de la distance de la première, respectivement deuxième cible, par rapport à l'antenne ;

- la polarisation de la première forme d'onde est distincte de la polarisation de la deuxième forme d'onde, définies chacune en fonction de la géométrie d'observation et du type de zone cible, de façon à maximiser le rapport cible à fouillis de l'image.

9. Système de détection (1) selon l'une quelconque des revendications 6 à 8, dans lequel la première zone cible (Z1) reste la même sur plusieurs cycles consécutifs et la deuxième zone cible (Z2) reste la même sur plusieurs cycles consécutifs.

10. Système de détection (1) selon l'une quelconque des revendications 6 à 9, adapté pour, lors de chacun desdits cycles :

effectuer la première émission d'onde vers la première zone cible (Z1), la première loi de phase commandée étant appliquée auxdits éléments rayonnants ; puis

- effectuer la deuxième émission d'onde vers la deuxième zone cible (Z2), la deuxième loi de phase commandée étant appliquée auxdits éléments rayonnants ; puis
- recevoir les échos issus de la première, respectivement deuxième émission d'onde, la première, respectivement deuxième loi de phase commandée étant alors appliquée auxdits éléments rayonnants.

[Fig. 1]

[Fig. 2]

[Fig. 3]

[Fig. 4]

[Fig. 5]

[Fig. 6]

[Fig. 7]

**Europäisches Patentamt**
**European Patent Office**
**Office européen des brevets**

# RAPPORT DE RECHERCHE EUROPEENNE

Numéro de la demande

EP 24 17 1912

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GERHARD KRIEGER ET AL: "Multidimensional Waveform Encoding: A New Digital Beamforming Technique for Synthetic Aperture Radar Remote Sensing", IEEE TRANSACTIONS ON GEOSCIENCE AND REMOTE SENSING, vol. 46, no. 1, 1 janvier 2008 (2008-01-01), pages 31-46, XP055552078, USA ISSN: 0196-2892, DOI: 10.1109/TGRS.2007.905974 * page 36 - page 37; figures 6-8,15 * | 1-10 | INV. G01S13/90 |
| A | US 2020/174114 A1 (ROEMER CHRISTIAN [DE]) 4 juin 2020 (2020-06-04) * abrégé; figure 4 * | 1-10 | |
| A | US 2021/132188 A1 (WANG YU [CN] ET AL) 6 mai 2021 (2021-05-06) * abrégé; figure 1 * | 1 | DOMAINES TECHNIQUES RECHERCHES (IPC) |
| A | FR 3 027 408 A1 (THALES SA [FR]) 22 avril 2016 (2016-04-22) * abrégé; figure 2 * | 1-10 | G01S |
| A | DE 10 2013 221756 B3 (DEUTSCHES ZENTRUM FÜR LUFT UND RAUMFAHRT E V [DE]) 16 octobre 2014 (2014-10-16) * figure 1 * | 1-10 | |

Le présent rapport a été établi pour toutes les revendications

| Lieu de la recherche | Date d'achèvement de la recherche | Examinateur |
|---|---|---|
| Munich | 13 septembre 2024 | Rudolf, Hans |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 17 1912

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-09-2024

| Document brevet cité au rapport de recherche | Date de publication | Membre(s) de la famille de brevet(s) | Date de publication |
|---|---|---|---|
| US 2020174114    A1 | 04-06-2020 | CA        3068555 A1 | 24-01-2019 |
|  |  | EP        3432027 A1 | 23-01-2019 |
|  |  | IL         272048 A | 31-03-2020 |
|  |  | KR  20200027959 A | 13-03-2020 |
|  |  | KR  20240125699 A | 19-08-2024 |
|  |  | US     2020174114 A1 | 04-06-2020 |
|  |  | WO     2019015911 A1 | 24-01-2019 |
| US 2021132188    A1 | 06-05-2021 | CN        110703250 A | 17-01-2020 |
|  |  | EP        3819661 A1 | 12-05-2021 |
|  |  | US     2021132188 A1 | 06-05-2021 |
| FR 3027408       A1 | 22-04-2016 | AUCUN |  |
| DE 102013221756 B3 | 16-10-2014 | DE 102013221756 B3 | 16-10-2014 |
|  |  | EP        3060939 A1 | 31-08-2016 |
|  |  | ES        2704174 T3 | 14-03-2019 |
|  |  | WO     2015059043 A1 | 30-04-2015 |

EPO FORM P0460

Pour tout renseignement concernant cette annexe : voir Journal Officiel de l'Office européen des brevets, No.12/82